**Europäisches Patentamt**

**European Patent Office**

**Office européen des brevets**

(19)

(11) Veröffentlichungsnummer : **0 164 553**
**B1**

(12)
# EUROPÄISCHE PATENTSCHRIFT

(45) Veröffentlichungstag der Patentschrift :
06.07.88

(51) Int. Cl.⁴ : **F 16 H  47/08**

(21) Anmeldenummer : 85105357.9

(22) Anmeldetag : 02.05.85

(54) **Mehrgängiges, über ein hydraulisches Steuerventilsystem schaltbares, hydrokinetisch-mechanisches Wechselgetriebe für Kraftfahrzeuge.**

(30) Priorität : 12.05.84 DE 3417703

(43) Veröffentlichungstag der Anmeldung :
18.12.85 Patentblatt 85/51

(45) Bekanntmachung des Hinweises auf die Patenterteilung : 06.07.88 Patentblatt 88/27

(84) Benannte Vertragsstaaten :
BE DE FR GB IT NL SE

(56) Entgegenhaltungen :
EP-A- 0 072 084
DE-A- 2 227 555
DE-A- 2 821 008
FR-A- 2 143 813
FR-A- 2 366 495
GB-A- 1 554 190
GB-A- 2 067 688
US-A- 2 829 542
US-A- 3 073 179
US-A- 4 382 393

(73) Patentinhaber :  **FORD-WERKE   AKTIENGESELL-SCHAFT**
**Ottoplatz 2 Postfach 21 03 69**
**D-5000 Köln 21 (DE)**
**BE DE IT NL SE**
**FORD MOTOR COMPANY LIMITED**
**Eagle Way**
**Brentwood Essex CM13 3BW (GB)**
**GB**
**FORD FRANCE SOCIETE ANONYME**
**344 Avenue Napoléon Bonaparte B.P. 307**
**F-92506 Rueil Malmaison Cedex (FR)**
**FR**

(72) Erfinder : **Graef, Kurt**
**Römerfeldstrasse 7**
**D-5024 Pulheim (DE)**
Erfinder : **Serf, Josef**
**Breslauer Strasse 25**
**D-5000 Köln 40 (DE)**
Erfinder : **Lauscher, Friedrich**
**Kommweg 88**
**D-5166 Kreuzau-Drove (DE)**
Erfinder : **Axt, Egon**
**Pohler Bruch 19**
**D-5057 Bechen/Pohl (DE)**
Erfinder : **Pötzsch, Werner**
**Neusser Strasse 629**
**D-5000 Köln 60 (DE)**
Erfinder : **Sastrarahardja, Paulus**
**Manstedtener Berg 2**
**D-5024 Pulheim (DE)**
Erfinder : **Körfer, Peter**
**Thomasweg 1**
**D-5142 Hückelhoven 3 (DE)**

Erfinder : **Croonen, Werner**
**Wohnpark Haus Nr. 30**
**D-5010 Bergheim-Ahe (DE)**
Erfinder : **Wirtz, Hans-Peter**
**Am Feldgarten 16**
**D-5000 Köln 71 (DE)**

(74) Vertreter : **Ritzkowsky, Harald, Dipl.-Ing.**
**Ford-Werke Aktiengesellschaft Patentabteilung**
**Z/DRP Ottoplatz 2**
**D-5000 Köln 21 (DE)**

2

## Beschreibung

Die Erfindung geht aus von einem mehrgängigen, über ein hydraulisches Steuerventilsystem schaltbares hydrokinetisch-mechanisches Wechselgetriebe für Kraftfahrzeuge der im Oberbegriff des Patentanspruchs 1 erläuterten Art.

Aus der DE-OS 22 27 555 der Anmelderin ist bereits ein mehrgängiges, hydrokinetisch-mechanisches Wechselgetriebe für Kraftfahrzeuge bekannt, bei dem, ausgehend von einem gegebenen mehrgängigen Wechselgetriebe, bestehend aus einem hydrokinetischen Drehmomentwandler und einem Planetenräder-Wechselgetriebe in Form eines sogenannten Simpson-Satzes, das normalerweise drei Vorwärtsgänge und einen Rückwärtsgang zur Verfügung stellt, unter Beibehaltung wesentlicher Teile des Getriebes ein vier Vorwärtsgänge und einen Rückwärtsgang zur Verfügung stellendes Getriebe geschaffen wird, indem ein einfacher Planetenradsatz mit einer diesen steuernden Kupplungs- und Bremsenanordnung vorgeschaltet wird.

Das Getriebe ist hierbei zwischen seiner Eingangs- und seiner Ausgangswelle mit einer Mittenwelle versehen, derart, daß die die Antriebswelle des Getriebes bildende Turbinenwelle treibend mit dem Ringrad des vorgeschalteten Planetenradsatzes verbunden ist, dessen Sonnenrad über ein Verbindungsteil treibend mit einer Bremstrommel verbunden ist, an deren Außenseite ein Bremsband und in deren Innenseite eine Lamellenkupplung angreifen, so daß entweder das Sonnenrad über das Bremsband festgelegt oder aber über die Lamellenkupplung mit dem Ringrad verbunden werden kann und wobei der Planetenradträger des vorgeschalteten Planetenradsatzes treibend mit der Mittenwelle verbunden ist.

Die Mittenwelle ist mit einem das Eingangsglied des Simpson-Satzes bildenden Kupplungskörper verbunden.

Bei dieser Anordnung des vorgeschalteten Planetenradsatzes wird dieser so geschaltet, daß er in den ersten drei Vorwärtsgängen als ein Untersetzungsgetriebe wirkt, das die Gesamtübersetzung des mehrgängigen Wechselgetriebes reduziert und so das Getriebe für die Anwendung in Verbindung mit leistungsschwächeren Verbrennungsmotoren von niedrigem Drehmoment und höheren Drehzahlen anwendbar macht.

Im vierten Vorwärtsgang wird der vorgeschaltete Planetenradsatz gesperrt und liefert in Verbindung mit dem gleichfalls gesperrten Simpson-Satz eine 1 : 1 Übersetzung eines direkten Vorwärtsganges.

Geht man davon aus, daß das gegebene Getriebe in Form eines hydrokinetischen Drehmomentwandlers und eines Planetenrädergetriebes in Form eines Simpson-Satzes für Verbrennungsmotoren einer bestimmten Leistungsklasse zwischen 1,8 l bis 2,8 l Hubraum bzw. 55-110 kW ausgelegt ist, so sind die beibehaltenen Bauteile zweifelsohne für die Motoren der niedrigeren Leistungsklasse etwas überdimensioniert.

Aus der US-A-3 073 179 und der GB-A-2 067 688 ist es im allgemeinen bekannt, einem mehrgängigen Hauptplanetenradsatz einen zweigängigen, ins schnelle übersetzenden Planetenradsatz vorzuschalten, um somit unter anderem einen ins schnelle übersetzten höchsten Getriebegang, einen sogenannten Schon- oder Schnellgang zu erzielen.

Die bekannten Getriebe weisen unterschiedliche Hauptplanetenradsätze auf und auch der Vorschalt-Planetenradsatz ist mit seiner Kupplung und seiner Bremse unterschiedlich an den Hauptplanetenradsatz angeschlossen und insbesondere ist eine im Vorschalt-Planetenradsatz vorgesehene Überholkupplung nicht in der gleichen günstigen Weise zwischen dem Eingangsglied des Vorschaltsatzes und dessen Ausgangsglied angeordnet, so daß auch bei gesperrtem Vorschaltsatz eine Belastung der Zahnflanken der Elemente des Vorschaltsatzes auftritt, wodurch infolge Drehschwingungen auch bei einem gesperrten Vorschaltsatz Geräusche und Verschleiß auftreten.

Dem gegenüber ist gemäß der Erfindung die Überholkupplung des Vorschaltsatzes unmittelbar zwischen dessen Eingangsglied und Ausgangsglied angeordnet, wodurch die Drehmomentübertragung bei gesperrtem Vorschaltsatz ohne Beaufschlagung der Zahnflanken der Elemente des Vorschaltsatzes erfolgen kann.

Die Aufgabe der Erfindung ist es, ähnlich wie bei dem bekannten Getriebe, ausgehend von einem vorgegebenen Getriebe mit einem hydrokinetischen Drehmomentwandler und einem Planetenrad-Getriebe in Form eines Simpson-Satzes, unter Beibehaltung wesentlicher Bauteile durch Vorschalten eines einfachen Planetenradsatzes, ein auf vier Vorwärtsgänge und einen Rückwärtsgang erweitertes Getriebe zu schaffen, dessen vierter Vorwärtsgang jedoch zur Erzielung von Kraftstoffeinsparungen als Schongang ausgelegt ist. Darüberhinaus wird in diesem Zusammenhang ein an sich bekannter hydrokinetischer Drehmomentwandler mit einer Überbrückungskupplung verwendet, so daß im dritten und vierten Vorwärtsgang oberhalb bestimmter Geschwindigkeiten jeglicher Schlupf im Wandler vermieden werden kann.

Ein weiterer Teil der Aufgabe der Erfindung ist es, den Wirkungsgrad des erweiterten Getriebes so zu verbessern, daß die beim vorgegebenen Getriebe vorhandene Druckmittelpumpe mit kleinem Leistungsbedarf auch für das erweiterte Getriebe beibehalten werden kann, ohne daß hierdurch Schwierigkeiten in der Versorgung des Drehmomentwandlers bzw. des erweiterten Getriebes mit Druckmittel und Schmiermittel auftreten.

Gemäß der Erfindung wird diese Aufgabe gelöst, indem bei einem Getriebe gemäß dem Oberbegriff des Patentanspruchs 1 die im Kennzeichenteil des Patentanspruchs aufgezeigten Merkmale sowie die in den Ansprüchen 2 bis 5 erläuterten Maßnahmen angewendet werden.

Dadurch, daß die die Antriebswelle des Getriebes bildende Turbinenwelle treibend mit dem Planetenradträger kerbverzahnt verbunden ist, dessen Sonnenrad über ein Verbindungsteil mit einer Bremstrommel kerbverzahnt verbunden ist, an deren Außenseite ein Bremsband und an deren Innenseite eine Lamellenkupplung angreift, wobei über das Bremsband das Sonnenrad festlegbar ist und über die Lamellenkupplung das Sonnenrad mit dem Planetenradträger zur Sperrung des Planetenradsatzes verbindbar ist und wobei das Ringrad mit der Mittenwelle kerbverzahnt verbunden ist, die wieder mit dem Eingangsglied, dem Kupplungskörper, des Simpson-Satzes kerbverzahnt verbunden ist und zusätzlich zwischen einem topfförmigen Teil der Mittenwelle und der Nabe des Planetenradträgers eine Überholkupplung angeordnet ist, wird in Schaltposition « D » für den 1., 2. und 3. Gang sowie den Rückwärtsgang ein Sperren des vorgeschalteten Schongang-Planetenradsatzes in Antriebsdrehrichtung sichergestellt, ohne daß hierfür eine hydraulische Servo-Einrichtung betätigt werden müßte. Die zwischen dem Sonnenrad und dem Planetenradträger vorgesehene Lamellenkupplung wird lediglich betätigt, wenn eine Motorbremswirkung für den Schiebebetrieb bei Bergabfahrten gewünscht wird und das an der mit dem Sonnenrad verbundenen Bremstrommel angreifende Bremsband wird nur über ein Servo betätigt, wenn der Schongang im Fahrbereich « D » eingeschaltet wird.

Dadurch, daß der mit einer Wandler-Überbrückungskupplung versehene hydrokinetische Drehmomentwandler sowohl im 3. als auch im 4. Vorwärtsgang geschwindigkeits- und lastabhängig einrückbar ist und die Ansteuerung der Wandler-Überbrückungskupplung über zwei umschaltbare Druckmittelkreisläufe über zwischen der Antriebswelle und einer gehäusefesten Hohlnabe gebildete Kanäle erfolgt, wobei der eine der Kanäle über radiale und axiale Bohrungen in der Leitradnabe sowie quer durch den Bereich der Rollenanordnung der Überholkupplung des Leitrades verläuft, wird die Bereitstellung von größeren, geringere Druckverluste bewirkenden Strömungskanälen erreicht.

Dadurch, daß die Lagerstellen des Wechselgetriebes in bekannter Weise zum Teil mit Nadellagern versehen sind und über ein vorderes, mittleres und hinteres Schmierölkanalsystem versorgt sind, wobei ein Zweigkanal des mittleren Schmierölkanales den Rollenbereich der ersten Überholkupplung beaufschlagt und eine Ölstauscheibe den Abfluß des Schmieröles drosselt, das die Rollkörper im Freilaufbetrieb aufschwimmen, werden Reibungsverluste in den höheren Gängen auf ein Minimum reduziert.

Dadurch, daß das Bremsband des Schongang-Servos über einen an sich bekannten eine Kraftübersetzung ermöglichenden Betätigungshebel betätigt wird, kann das Schongang-Servo sowie dessen Druckbeaufschlagung klein gehalten werden, wodurch wieder der Wirkungsgrad des Getriebes infolge der geringeren Verlustleistung der Druckmittelpumpe erhöht wird.

Dadurch, daß im Steuerventilgehäuse Aufnahmen für elektromechanische Druckgebereinheiten vorgesehen sind, die durch ihren nachträglichen Einsatz die Nachbildung der für das hydraulische Steuerventilsystem wesentlichen Drucksignale, des Drosseldruckes und des Reglerdruckes elektronisch von einem Mikroprozessor ermöglichen, wird weiterhin der Bedarf an Druckmittel im Getriebe verringert.

Die Erfindung wird anhand eines in den beiliegenden Zeichnungen erläuterten Ausführungsbeispieles näher erläutert.

Es zeigt :

Fig. 1A und 1B eine Seitenansicht eines mehrgängigen, hydrokinetisch-mechanischen Wechselgetriebes gemäß der Erfindung, dessen obere Hälfte im Schnitt dargestellt ist ;

Fig. 2 eine Tabelle über die in den verschiedenen Gangstufen eingerückten bzw. angelegten Kupplungen und Bremsen.

Fig. 3 einen Schnitt entlang der Linie III-III in Fig. 1A ;

Fig. 4 einen Schnitt entlang der Linie IV-IV in Fig. 1B ;

Fig. 5 einen Schnitt entlang der Linie V-V in Fig. 1B ;

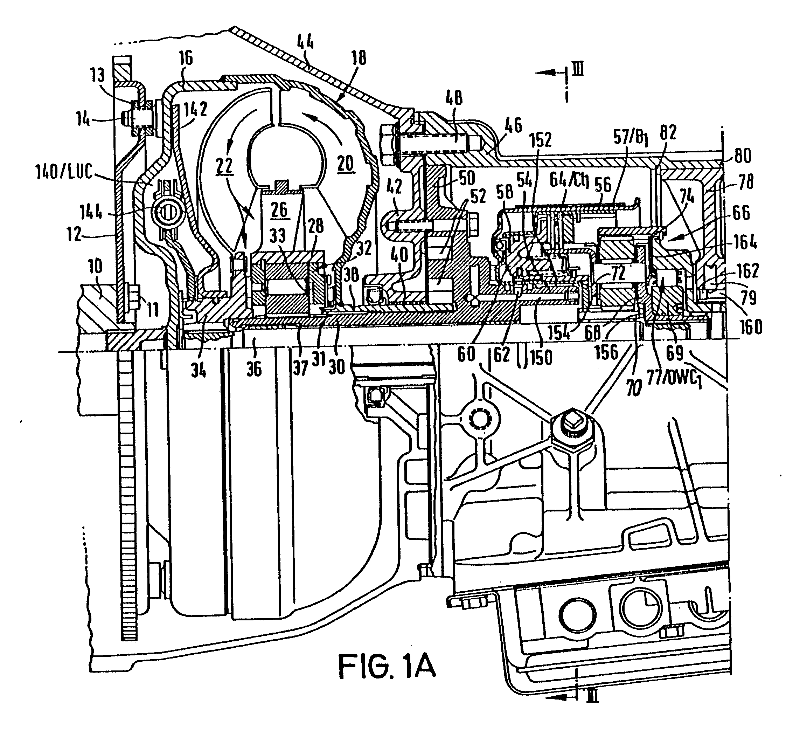

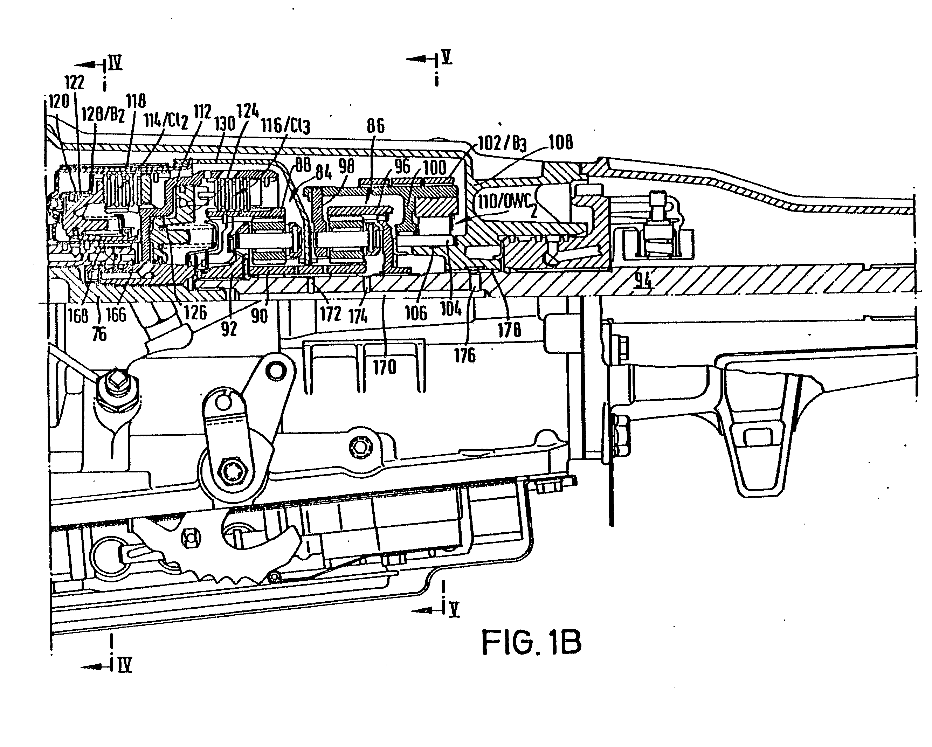

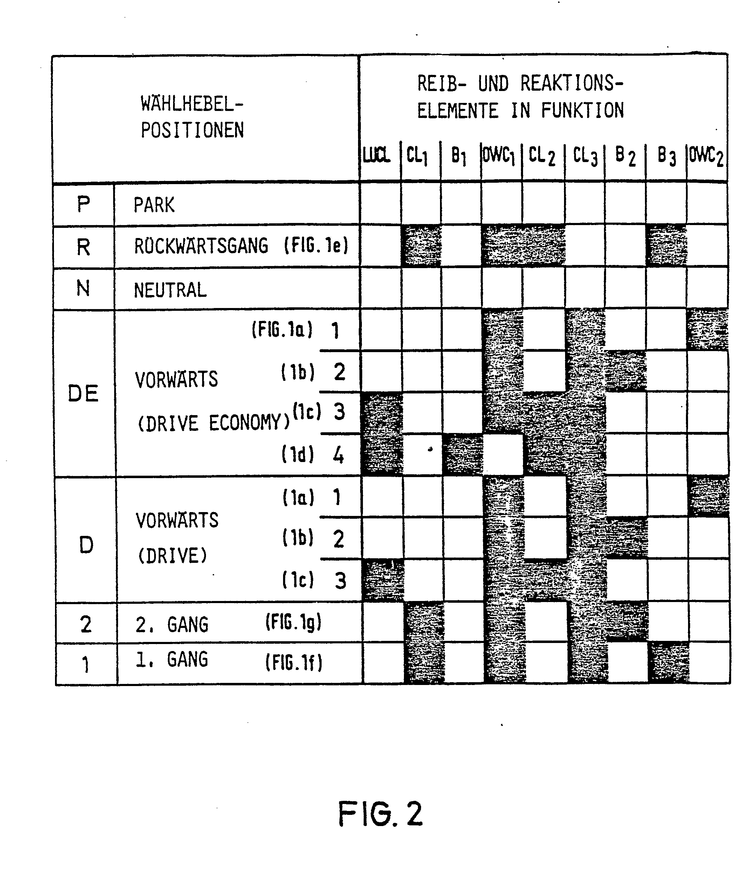

In Figur 1 ist das eine Ende der Kurbelwelle eines Verbrennungsmotors mit 10 bezeichnet. Es ist über Schrauben 11 mit der Mitte einer Antriebsplatte 12 verbunden, deren Rand über Muttern 13 an Schraubenbolzen 14 am Antriebsmantel 16 eines hydrokinetisch Drehmomentwandlers 18 befestigt ist. Der hydrokinetische Drehmomentwandler 18 besteht in bekannter Weise aus einem Pumpenteil 20, einem Turbinenteil 22 und einem Leitteil 26, die in einem ringförmigen Strömungskreislauf angeordnet sind. Der Leitteil 26 ist hierbei in üblicher Weise über eine Nabe 28 auf einer feststehenden Hohlnabe 30 über eine Überholkupplung 32 abgestützt. Das Turbinenteil 22 ist über eine Turbinennabe 34 mit einer Turbinenwelle 36 verbunden, die die Eingangswelle des Getriebes bildet. Der Pumpenteil 20 ist über eine Pumpennabe 38 in einer Lageröffnung 40 in einer Querwand 42 abgestützt, die einen Teil des Gehäuses 44 des Drehmomentwandlers bildet.

Ein Getriebegehäuse 46 ist über Schrauben 48 mit dem Drehmomentwandlergehäuse 44 verbunden. Eine Pumpengehäuse 50 ist mit der Querwand 42 verbunden und besteht mit der feststehenden Hohlnabe 30 aus einem Stück.

Das Pumpengehäuse 50 enthält Zahnräder 52 einer Verdrängungspumpe, die das Druckmittel für das hydraulische Steuerventilsystem zur Verfügung stellt. Das Pumpengehäuse 50 weist weiterhin einen Lagerteil 54 auf, auf dem eine Bremstrommel 56 drehbar gelagert ist, die einen ringförmigen Zylinder 58 und einen ringförmigen Kolben 60 aufnimmt. Der Zylinder 58 kann über einen Kanal 62 im Lagerteil 54 mit Druckmittel beaufschlagt werden.

Der Zylinder 58 und der Kolben 60 bilden das Betätigungsservo für eine erste Lamellenkupp-

lung 64/$CL_1$. Die Bremstrommel 56 wird von einem Bremsband 57 umfaßt und bildet eine erste Bremse $B_1$.

Ein vorgeschalteter, einfacher Planetenradsatz 66 besteht aus einem mit der Turbinenwelle 36 treibend verbundenen, aus zwei Blechpreßteilen geschweißten Planetenradträger 68, einem über ein getrenntes, einerseits mit einer Innenverzahnung am Sonnenrad 70 und andererseits mit einer Außenverzahnung an der Bremstrommel 56 angreifendes Verbindungsteil 72 und einem Ringrad 74, das direkt mit der Mittenwelle 76 kerbverzahnt verbunden ist.

Der Planetenradsatz 66 kann hierbei durch Einrücken der ersten Kupplung $CL_1$, die den Planetenradträger 68 mit dem Sonnenrad 70 verbindet zur Erzielung einer Motorbremswirkung in den Schaltpositionen « 1, 2, 3, und R » gesperrt werden. Weiterhin ist der Planetenradsatz 66 in Antriebsdrehrichtung des Ringrades durch eine Überholkupplung 77/$OWC_1$ gesperrt, die zwischen einem Ansatz an der Mittenwelle 76 und einem mit dem Planetenradträger 68 verbundenen inneren Laufring 69 angeordnet ist und in der Schaltposition « D » wirksam ist. Der Planetenradsatz 66 wird hierbei durch das Anlegen des Bremsbandes 57/$B_1$ als Untersetzungsgetriebe wirksam, um den Schongang bereitzustellen.

Eine Querwand 78 ist im Getriebegehäuse 46 angeordnet und wird an einer Seite durch eine Schulter 80 und an der anderen Seite durch einen Sprengring 82 in ihrer Lage fixiert. Die Querwand 78 ist hierbei mit Versorgungskanälen 79 zur Verteilung des Druckmittels versehen.

Die Querwand 78 trennt den Schongang-Planetenradsatz 66 von einem zweiten Getriebeteil innerhalb des Getriebegehäuses 46, in dem ein zweiter und ein dritter Planetenradsatz 84 und 86 angeordnet sind.

Der Planetenradsatz 84 besteht aus einem Ringrad 88, einem Sonnenrad 90, einem Planetenradträger 92 mit darauf angeordneten Planetenrädern, wobei der Planetenradträger 92 unmittelbar mit der Abtriebswelle 94 des Getriebes kerbverzahnt verbunden ist. Der Planetenradsatz 86 besteht aus einem Ringrad 96, einem Planetenradträger 98 mit darauf angeordneten Planetenrädern und einem Sonnenrad 90, das mit dem Sonnenrad des Satzes 84 ein Bauteil bildet. Der Planetenradträger 98 ist treibend mit einer Bremstrommel 100 verbunden, die von einem Bremsband 102 umfaßt wird und eine dritte Bremse $B_3$ bildet.

Die Bremstrommel 100 ist über eine Überholkupplung 110 an einem feststehenden inneren Laufring 104 abgestützt, der drehfest an einem Vorsprung 106 der Endwand 108 des Getriebegehäuses aufgenommen ist.

Die Mittenwelle 76 ist direkt mit einem das Eingangsglied des Simpson-Satzes bildenden Kupplungskörper 112 verbunden, der Kupplungsscheiben für eine zweite und dritte Lamellenkupplung 114/$CL_2$ und 116/$CL_3$ trägt. Kupplungsscheiben, die mit dem Ringrad 88 in Verbindung stehen, wirken mit den Kupplungsscheiben am Kupplungskörper 112 zusammen und ermöglichen eine treibende Verbindung zwischen dem Kupplungskörper 112 und dem Ringrad 88.

In ähnlicher Weise besteht die Lamellenkupplung 114/$CL_2$ aus Kupplungsscheiben, die vom Kupplungskörper 112 getragen werden und aus Kupplungsscheiben, die von einer Bremstrommel 118 getragen werden, die über eine Antriebsglocke 130 mit dem gemeinsamen Sonnenrad 90 der beiden Planetenradsätze verbunden ist.

Die Kupplungsscheiben am Kupplungskörper 112 wirken mit den Kupplungsscheiben an der Bremstrommel 118 zusammen und ermöglichen eine treibende Verbindung zwischen dem Kupplungskörper 112 und dem gemeinsamen Sonnenrad 90.

Die Kupplungsscheiben der Lamellenkupplung 114/$CL_2$ können durch einen Kolben 120 gegeneinander gepreßt werden, der in einem Zylinder 122 in der Bremstrommel 118 angeordnet ist. Die Kupplungsscheiben der Lamellenkupplung 116/$CL_3$ werden über einen Kolben 124 gegeneinander gedrückt, der in einem ringförmigen Zylinder 126 im Kupplungskörper 112 angeordnet ist.

Ein Bremsband 128 umfaßt die Bremstrommel 118 und bildet eine zweite Bremse $B_2$, über die das über die Antriebsglocke 123 verbundene gemeinsame Sonnenrad 90 der beiden Planetenradsätze festgelegt werden kann.

Bei Einlegen des Handschalthebels in die Schaltpositionen « 1, 2 oder R » ist während eines Betriebes in den zwei unteren Vorwärtsgängen sowie im Rückwärtsgang der erste Planetenradsatz 66 gesperrt und zwar im ersten und zweiten Vorwärtsgang und im Rückwärtsgang sowohl durch die eingerückte erste Kupplung $CL_1$ als auch durch die wirksame erste Überholkupplung $OWC_1$. Das Antriebsdrehmoment wird daher von der Turbinenwelle über den gesperrten vorgeschalteten Planetenradsatz auf die Mittenwelle und von dieser auf das Eingangsglied des Simpson-Satzes übertragen und zwar sowohl in Zugals auch in Schubrichtung.

Bei Einlegen des Handschalthebels in die Schaltposition « D » erfolgen selbsttätige Schaltungen.

Zum Schalten des 1. Ganges erfolgt der Antrieb des Simpson-Satzes über die eingerückte dritte Kupplung $CL_3$, wobei der Planetenradträger des dritten Satzes über die dritte Bremse $B_3$ und/oder die Überholkupplung 100/$OWC_2$ festgelegt ist.

Zum Schalten des 2. Ganges bleibt der Antrieb des Simpson-Satzes über die dritte Kupplung $CL_3$ aufrecht und anstelle des Planetenträgers des dritten Satzes wird das Sonnenrad 90 über die zweite Bremse $B_2$ festgelegt.

Zum Schalten des 3. direkten Ganges wird zusätzlich zur dritten Kupplung $CL_3$ die zweite Kupplung $CL_2$ eingerückt und die zweite Bremse $B_2$ gelöst, wodurch der zweite Planetenradsatz gesperrt wird und in Verbindung mit dem gleichfalls gesperrten vorgeschalteten Planetenradsatz eine 1 : 1 direkte Übersetzung erzielt wird.

Zum Schalten des 4. Ganges wird die erste Bremse $B_1$ betätigt, wodurch das Sonnenrad des ersten Satzes festgelegt wird. Dadurch wird das Ringrad des ersten Satzes mit einer übersetzten Drehzahl angetrieben und die erste Überholkupplung $OWC_1$ wird gelöst. Der Simpson-Satz bleibt durch die beiden eingerückten Kupplungen $CL_2$ und $CL_3$ in seinem gesperrten Zustand.

Zum Schalten des Rückwärtsganges ist der erste Planetenradsatz, wie im 1. Gang, durch die angelegte erste Kupplung $CL_1$ bzw. die Überholkupplung 77/$OWC_1$, gesperrt. Der Antrieb des Simpson-Satzes erfolgt über die zweite Kupplung $CL_2$, wobei der Planetenradträger des dritten Satzes ist über die dritte Bremse $B_3$ festgelegt ist.

Der hydrokinetische Drehmomentwandler 18 ist zwischen dem Antriebsmantel 16 und der Turbinen- und Kupplungsnabe 34 mit einer Drehmomentwandler-Überbrückungskupplung 140/LUC versehen, die in bekannter Weise aus einer Kupplungsscheibe 142 in Verbindung mit einer Dämpferanordnung 144 besteht.

Die Drehmomentwandler-Überbrückungskupplung 140/LUC ist über zwei umschaltbare Druckmittelkreisläufe ein- und ausrückbar, die über einen zwischen der Antriebswelle 36 und der gehäusefesten Hohlnabe 30 gebildeten ringförmigen Kanal 37 bzw. einem zwischen der gehäusefesten Hohlnabe 30 und der als Hohlwelle ausgebildeten Pumpennabe 38 gebildeten ringförmigen Kanal 31 beaufschlagt werden. Der eine Kanal 31 verläuft hierbei über radiale Bohrungen 33 in der Leitradnabe 28, wobei er den Bereich der Rollenanordnung der Leitrad-Überholkupplung 32 quer durchströmt und dadurch einerseits größere Durchströmquerschnitte sicherstellt und andererseits im Freilaufbetrieb der Überholkupplung durch Aufschwimmen der Rollenkörper für ein Verringern der Reibungsverluste sorgt.

Gleichfalls zur Verringerung der Reibungsverluste sind eine Vielzahl von Lagerstellen des Wechselgetriebes in an sich bekannter Weise mit Nadellagern versehen und werden über ein vorderes, mittleres und hinteres Schmierölkanalsystem 150, 160 bzw. 170 entsprechend mit Schmieröl versorgt. Das vordere Schmierölkanalsystem 150 versorgt hierbei in erster Linie die Lagerung 152 der Schongang-Kupplungs- und Bremstrommelanordnung 56 bis 64, die Anlaufscheiben 154 des Vorschaltplanetenradsatzes 66 sowie die axiale Abstützung des Planetenradträgers 68 über ein Nadellager 156. Ein Zweigkanal 162 des mittleren Schmierölkanalsystems 160 versorgt den Rollenbereich der ersten Überholkupplung 77/$OWC_1$ wobei an der gegenüberliegenden Seite der Überholkupplung eine Ölstauscheibe 164 derart angeordnet ist, daß der Abfluß des Schmieröls derart gedrosselt wird, daß die Rollkörper im Freilaufbetrieb aufschwimmen können und hierdurch die Verlustreibung erheblich reduziert wird. Ein Zweigkanal 166 versorgt in erster Linie die Lagerung 168 der Kupplungszylinder-Bremstrommelanordnung der Vorwärtsgang-Kupplung 114 bis 122.

Das hintere Schmierölkanalsystem 170 versorgt hierbei über Zweigkanäle 172, 174 und 176 die Lagerung des gemeinsamen Sonnenrades 90 des Simpson-Planetenradsatzes, die Planetenräder des Simpson-Planetenradsatzes und die Lagerung 178 der Abtriebswelle 94 sowie die hintere Überholkupplung 110.

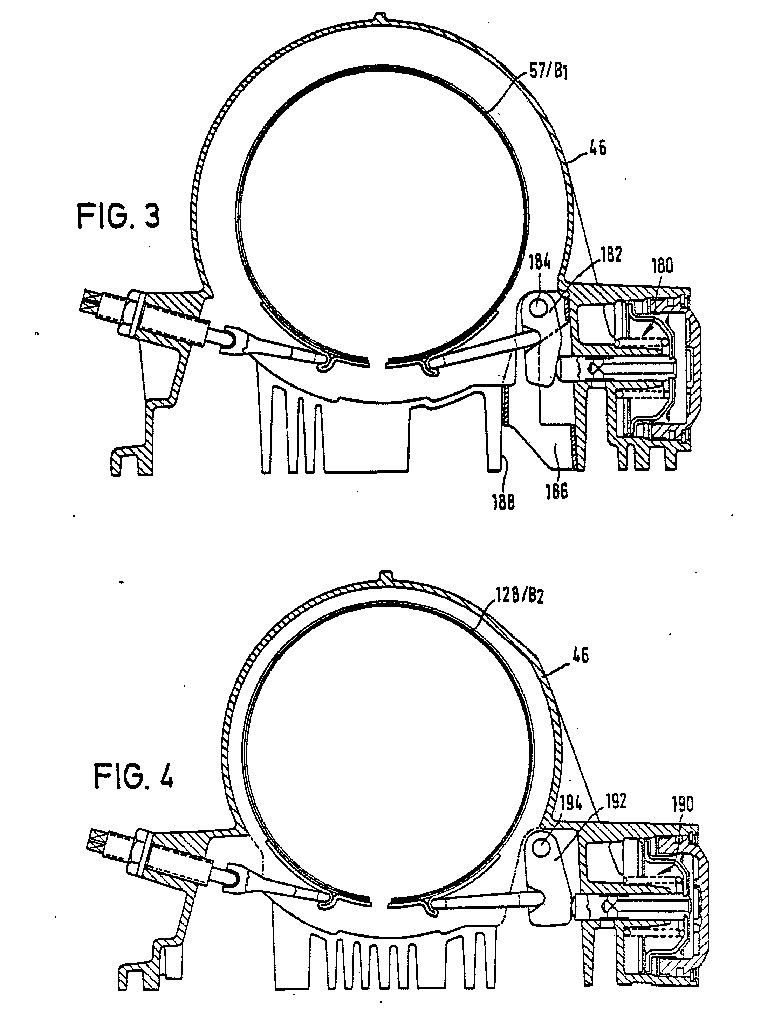

Wie aus Figur 3 zu ersehen ist, wird das Bremsband 57 der ersten Bremse $B_1$ durch ein im Volumen verhältnismäßig klein gehaltenes Servo 180 über einen eine Kraftübersetzung ermöglichenden Betätigungshebel 182 betätigt.

Wie aus Figur 4 zu ersehen ist, wird das Bremsband 128/$B_2$, das zum Festlegen des gemeinsamen Sonnenrades 90 des Simpson-Planetenradsatzes vorgesehen ist, gleichfalls durch ein verhältnismäßig geringes Volumen aufweisendes Servo 190 über einen eine Kraftübersetzung ermöglichenden Betätigungshebel 192 betätigt.

Dieser Betätigungshebel 192 liegt im Getriebegehäuse 46 von der Bearbeitungsseite her gesehen weiter hinten und die zur Aufnahme seines Schwenkbolzens 194 erforderlichen Bohrungen im Getriebegehäuse können nur hergestellt werden, wenn von der Bearbeitungsseite her ein Zugang freigehalten wird. Zu diesem Zweck ist der von der Bearbeitungsseite her weiter vorn im Getriebegehäuse 46 angeordnete Betätigungshebel 182 mit seinem Schwenkbolzen 184 in einem aus Blech gestanzten, im wesentlichen U-förmigen Lagerbock 186 angeordnet, der erst nach Bearbeitung der Aufnahme für den Bolzen 194 in die im Getriebegehäuse 46 vorgesehene Aufnahmetasche 188 eingeschoben wird.

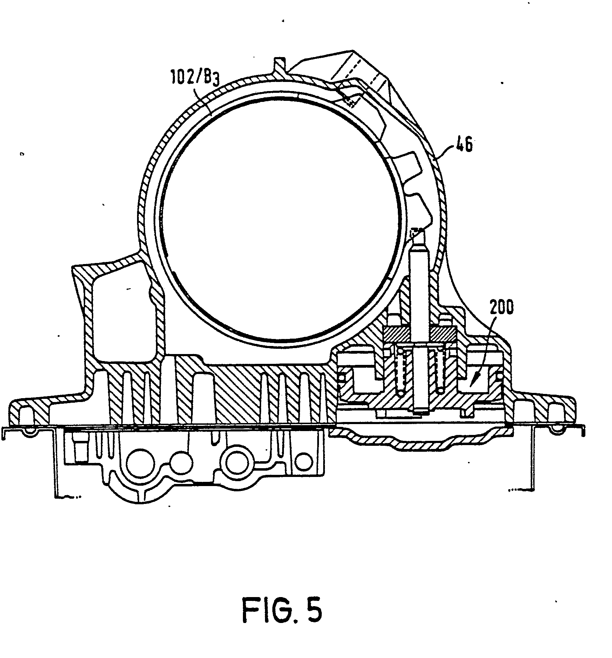

Wie aus Figur 5 zu ersehen ist, wird das Bremsband 102/$B_8$ über ein etwas größeres Servo 200 betätigt, das um das Getriebe seitlich schmal zu halten vertikal liegend angeordnet ist.

Im Labyrinth des Steuergehäuses können Leitungskanäle vorbereitet werden, um Leitungsdruckkanäle und Signaldruckkanäle an eine Ventilbohrung zu führen, in die von außen her elektromagnetisch gesteuerte Druckgeberventile einsetzbar sind, um das drehmomentabhängige Drosseldrucksignal und das fahrgeschwindigkeitsabhängige Reglerdrucksignal anstelle der üblichen hydraulischen Darstellung nunmehr über einen Mikroprozessor elektrohydraulisch darzustellen. Dadurch kann das übliche über ein Gestänge mit der Drosselklappe verbundene Drosseldruckventil und das an einem mit der Abtriebswelle verbundenen Teil angeordnete Reglerdruckventil entfallen.

**Patentansprüche**

1. Mehrgängiges, über ein hydraulisches Steuerventilsystem schaltbares, hydrokinetisch-mechanisches Wechselgetriebe für Kraftfahrzeuge, bestehend aus einem hydrokinetischen Drehmomentwandler (18) mit einem Pumpenteil, einem Leitteil und einem Turbinenteil und einem Planetenräder-Wechselgetriebe mit drei einfachen Planetenradsätzen, wobei ein erster Vorschalt-Satz (66) in einem ersten Teil und die anderen beiden Sätze in Form eines Simpson-Satzes (84 u. 86), in einem zweiten Teil eines Getriebegehäuses angeordnet sind und eine Eingangswelle (36) des Getriebes mit einem Ende im ersten Teil drehbar gelagert ist und eine Ausgangswelle (94) des Getriebes mit einem Ende im zweiten Teil drehbar gelagert ist und eine Mittenwelle (76) koaxial zwischen der Antriebs- und Abtriebswelle angeordnet ist, im ersten Teil eine Bremse $B_1$ zum Festlegen eines Reaktionselementes und eine erste Kupplung $CL_1$ zum Verspannen zweier Elemente des Vorschalt-Satzes (66) angeordnet sind und ein Ausgangselement direkt mit der Mittenwelle (76) verbunden ist und wobei die Sonnenräder des zweiten und dritten Satzes zu einem gemeinsamen (90) verbunden sind, der Planetenträger (92) des zweiten Satzes (84) und das Ringrad (96) des dritten Satzes (86) mit der Abtriebswelle (94) verbunden sind und eine zweite Kupplung $CL_2$ im zweiten Teil zum wahlweisen Verbinden der Mittenwelle (76) mit dem gemeinsamen Sonnenrad (90) und eine zweite Bremse $B_2$ zum Festlegen der beiden verbundenen Sonnenräder während eines Betriebes im 2. Gang vorgesehen ist und eine dritte Kupplung $CL_3$ im zweiten Teil zum wahlweisen Verbinden der Mittenwelle (76) mit dem Ringrad (88) des zweiten Satzes (84) während eines Betriebes in den Vorwärtsgängen und eine dritte Bremse $B_3$ zum Festlegen des Planetenträgers des dritten Satzes (86) während eines Betriebs im 1. Gang und im Rückwärtsgang vorgesehen ist, dadurch gekennzeichnet, daß die Turbinenwelle (36) über eine Vielkeilverzahnung treibend mit dem aus zwei Blechpreßteilen geschweißten Planetenträger (68) des ersten Satzes (66) verbunden ist, das Sonnenrad (70) des ersten Planetenradsatzes (66) über ein getrenntes, einerseits mit einer Innenverzahnung am Sonnenrad (70) und andererseits mit einer Außenverzahnung an einer Bremstrommel (56) angreifendes Verbindungsteil (72) treibend mit der Bremstrommel (56) verbunden ist, die von einem Bremsband (57) eine erste Bremse ($B_1$) bildend umfaßt ist, das Ringrad (74) des ersten Satzes unmittelbar treibend mit der Mittenwelle (76) verbunden ist und zwischen einem inneren Laufring (69) am Planetenradträger (68) und einem topfförmigen Ansatz an der Mittenwelle (76) eine in Antriebsdrehrichtung sperrende erste Überholkupplung (77/$OWC_1$) angeordnet ist und eine erste Kupplung (64/$CL_1$) zwischen der Bremstrommel (56) und dem Planetenradträger (68) vorgesehen ist und wobei in den Schaltpositionen « 1, 2 und R » bei eingerückter erster Kupplung ($CL_1$) im 1., 2. und Rückwärts-Gang der Planetenradsatz (66) in beiden Drehrichtungen sperrt und in der Schaltposition « D » durch die Überholkupplung ($OWC_1$) in den drei Vorwärtsgängen gesperrt bleibt, und durch Anlegen der ersten Bremse ($B_1$) im 4. Gang ein untersetzter Schongang schaltbar ist.

2. Mehrgängiges Wechselgetriebe nach Anspruch 1, wobei der hydrokinetische Drehmomentwandler mit einer Wandler-Überbrückungskupplung versehen ist, die sowohl im 3. als auch im 4. Vorwärtsgang einrückbar ist und wobei die Ansteuerung der Wandler-Überbrückungskupplung über zwei umschaltbare Druckmittelkreisläufe erfolgt, die über zwei zwischen der Antriebswelle, einer gehäusefesten Hohlnabe und einer Pumpennabe gebildeten ringförmigen Kanäle beauschlagt werden, dadurch gekennzeichnet, daß der eine über radiale Borhrungen (33) in der Leitradnabe verlaufende Kanal (31) quer durch den Bereich der Rollenanordnung der Überholkupplung (32) verläuft.

3. Mehrgängiges Wechselgetriebe nach den Ansprüchen 1 und 2, wobei die Lagerstellen des Wechselgetriebes zum Teil mit Nadellagern versehen sind und über ein vorderes, mittleres und hinteres Schmierölkanalsystem mit Schmieröl versorgt sind, dadurch gekennzeichnet, daß ein Zweigkanal (162) des mittleren Schmierölkanalsystems (160) den Rollenbereich der ersten Überholkupplung (77/$OWC_1$) beaufschlagt und eine an der gegenüberliegenden Seite angeordnete Ölstauscheibe (164) den Abfluß des Schmieröls derart drosselt, daß die Rollkörper im Freilaufbetrieb aufschwimmen.

4. Mehrgängiges Wechselgetriebe nach den Ansprüchen 1 bis 3, wobei das Bremsband (57/$B_1$) des Schongang-Servos (180) über einen eine Kraftübersetzung ermöglichenden Betätigungshebel (182) betätigbar ist, dadurch gekennzeichnet, daß der den Betätigungshebel (182) lagernde Bolzen (184) in einem im Querschnitt U-förmigen, als Blechpreßteil ausgebildeten Lagerbock (186) angeordnet ist, der in eine Aufnahmetasche (188) im Getriebegehäuse (46) einsetzbar ist.

5. Mehrgängiges Wechselgetriebe nach den Ansprüchen 1 bis 4, dadurch gekennzeichnet, daß im Steuerventilgehäuse Aufnahmen für elektromechanische Druckgebereinheiten vorgesehen sind, die mit ihren Ventilkörpern derart in vorbereitete Leitungsdruck- und Signaldruckkanäle einragen, daß das drehmomentabhängige Drosseldrucksignal und das fahrgeschwindigkeitsabhängige Reglerdrucksignal in Abhängigkeit von einem in einem Mikroprozessor gespeicherten Kennfeld darstellbar ist.

## Claims

1. A multi-speed hydrokinetic-mechanical transmission for motor vehicles controllable by a hydraulic control valve system, consisting of a hydrokinetic torque converter (18) with a pump-, a stator- and a turbine part and of a planetary gear unit with three simple planetary gear sets, a first, overdrive, set (66) being disposed in a first part and the two other sets in the form of a Simpson-type gear set (84 and 86) in a second part of a gearbox housing, an input shaft (36) of the transmission being rotatably mounted with one end in the first part, an output shaft (94) of the transmission being rotatably mounted with one end in the second part and a central shaft (76) being disposed coaxially between the input and the output shaft, a brake $B_1$ for anchoring a reaction element and a first clutch $CL_1$ for blocking two elements of the overdrive set (66) being disposed in the first part and an output element being directly connected with the central shaft (76), and where the sun gears of the second and third gear sets are combined to form a common gear (90), the planetary gear carrier (92) of the second gear set (84) and the ring gear (96) of the third gear set (86) is connected with the output shaft (94), a second clutch $CL_2$ is provided in the second part for selectively connecting the central shaft (76) with the common sun gear (90) and a second brake $B_2$ is provided for anchoring the two integral sun gears during operation in second gear, a third clutch $CL_3$ is provided in the second part for selectively connecting the central shaft (76) with the ring gear (88) of the second gear set (84) during operation in the forward gears and a third brake $B_3$ is provided for anchoring the planetary gear carrier of the third gear set (86) during operation in first gear and in reverse gear, characterized in that the turbine shaft (36) is drivingly connected by a splined connection with the planetary gear carrier (68), formed by welding from two pressed sheet metal parts, of the first gear set (66), the sun gear (70) of the first planetary gear set (66) is drivingly connected with a brake drum (56) by means of a separate connecting member (72) which on the one hand engages internal teeth of the sun gear (70) and on the other hand external teeth on the brake drum (56) which is surrounded by a brake band (57) thus forming a first brake ($B_1$), the ring gear (74) of the first gear set is drivingly connected directly with the central shaft (76), a first overrunning clutch ($77/OWC_1$) blocking in the driving direction of rotation is disposed between an inner bearing race (69) in the planetary gear carrier (68) and a pot-shaped lug on the central shaft (76), a first clutch ($64/CL_1$) is provided between the brake drum (56) and the planetary gear carrier (68), with the planetary gear set (66) blocking in both directions of rotation in the shifting positions « 1, 2 and R » with the first clutch ($CL_1$) engaged in the first, second and reverse gear and remaining blocked in the shifting position « D » by the overrunning clutch ($OWC_1$) in the three lower forward gears, and a geared-down overdrive being engageable in the fourth gear by applying the first brake ($B_1$).

2. A multi-speed transmission according to claim 1, wherein the hydrokenetic torque converter is provided with a converter lock-up clutch engageable in the third as well as in the fourth forward gear and wherein the converter lock-up clutch is addressed through two reversible pressure fluid circuits supplied by way of two annular ducts formed between the input shaft, a hollow hub fixed in the housing and a pump hub, characterized in that the duct (31) running through radial bores (33) in the stator hub passes transversely through the region of the roller arrangement of the overrunning clutch (32).

3. A multi-speed transmission according to claims 1 and 2, wherein the bearing points of the transmission are provided partially with needle roller bearings and supplied with lubricating oil by way of a front, a central and a rear lubricating oil duct system, characterized in that a branch duct (162) of the central lubricating oil duct system (160) supplies the roller area of the first overrunning clutch ($77/OWC_1$) and an oil retaining disc (164) disposed on the opposite side throttles the discharge of the lubricating oil in such a manner that the roller members float during coasting.

4. A multi-speed transmission according to claims 1 through 3, wherein the brake band ($57/B_1$) is controlled by the overdrive servo (180) by way of an actuating lever (182) which permits power multiplication, characterized in that the pivot pin (184) of the actuating lever (182) is disposed in a bearing block (186) of U-shaped cross-section punched from sheet metal and insertable in a holding pocket (188) in the gearbox housing (46).

5. A multi-speed transmission according to claims 1 through 4, characterized in that receiving spaces are provided in the control valve housing for electromechanical pressure transducers whose valve spindles protrude into preformed line pressure and signal pressure ducts in such a manner that the torque-dependent throttle pressure signal and the governor pressure signal dependent upon the velocity of travel can be displayed as functions in a family of characteristics stored in a microprocessor.

•

**Revendications**

1. Boîte à vitesses multiples hydraulique-mécanique pour véhicules automobiles, commandée par un système hydraulique de soupapes, composée d'un convertisseur de couple hydraulique (18) comportant une partie pompe, une partie de guidage et une partie turbine et d'une boîte à pignons satellites comportant trois engrenages planétaires simples, un premier engranage monté en amont (66) étant agencé dans une première partie et les deux autres engrenages sous forme d'un engrenage planétaire de Simpson (84 et 86) étant agencés dans une deuxième partie d'un carter de boîte, un arbre d'entrée (36) de la boîte étant logé rotatif par une extrémité dans la première partie et un arbre de sortie (94) de la boîte étant logé rotatif par une extrémité dans la deuxième partie, et un arbre intermédiaire (76) étant agencé coaxialement entre l'arbre menant et l'arbre mené, un frein $B_1$ pour la fixation d'un élément de réaction et un premier embrayage $CL_1$ pour le serrage de deux éléments de l'engrenage planétaire monté en amont (66) étant agencés dans la première partie et un élément de sortie étant relié directement avec l'arbre intermédiaire (76), et les roues solaires du deuxième et du troisième engrenages étant reliées en une seule (90), le porte-pignons satellites (92) du deuxième engrenage (84) et la couronne (96) du troisième engrenage (86) étant reliés avec l'arbre mené (94), et un deuxième embrayage $CL_2$ étant prévu dans

la deuxième partie pour relier alternativement l'arbre intermédiaire (76) avec la roue solaire commune (90) et un deuxième frein B₂ étant prévu pour la fixation des deux roues solaires reliées pendant un fonctionnement en 2ème vitesse, et un troisième embrayage CL₃ étant prévu dans la deuxième vitesse une vitesse surmultipliée réduite est commutable.

2. Boîte à vitesses multiples selon la revendication 1, dans laquelle le convertisseur de couple hydraulique est muni d'un embrayage de prise directe de convertisseur qui est enclenchable aussi bien en 3ème qu'en 4ème vitesse avant et la commande de l'embrayage de prise directe de convertisseur est effectuée par deux circuits d'agent de pression commutables, qui sont alimentés par deux canaux de forme annulaire formés entre l'arbre moteur, un moyeu creux fixé sur le carter et un moyeu de pompe, caractérisée en ce qu'un canal (31) disposé par des alésages radiaux (33) dans le moyeu du stator passe transversalement dans la zone du dispositif de roulements de l'accouplement de rattrapage (32).

3. Boîte à vitesses multiples selon l'une quelconque des revendications 1 et 2, dans laquelle les points d'appui de la boîte sont en partie munis de roulements à aiguilles et sont alimentés en huile lubrifiante par un système de canal d'huile lubrifiante avant, intermédiaire et arrière, caractérisée en ce qu'un canal de dérivation (162) du système de canal d'huile lubrifiante intermédiaire (160) alimente la zone des roulements du premier accouplement de rattrapage (77/OWC₁) et un écran d'étranglement de l'huile (164) agencé sur la face opposée étrangle l'écoulement de l'huile lubrifiante de telle manière que les corps de roulement surnagent dans le fonctionnement à roue libre.

4. Boîte à vitesses multiples selon l'une quelconque des revendications 1 à 3, dans laquelle le ruban de frein (57/B₁) du dispositif assisté de la vitesse surmultipliée (180) peut être commandé par un levier de commande (182) permettant une transmission partie pour relier alternativement l'arbre intermédiaire (76) avec la couronne (88) du deuxième engrenage (84) pendant un fonctionnement aux vitesses avant et un troisième frein B₃ étant prévu pour la fixation du porte-pignons satellites du troisième engrenage (86) pendant un fonctionnement en 1ère vitesse et en vitesse arrière, caractérisée en ce que l'arbre de turbine

(36) coopère, par des cannelures multiples, de manière menante avec le porte-pignons satellites (68) formé de deux pièces soudées en tôle du premier engrenage (66), la roue solaire (70) du premier engrenage planétaire (66) coopère de manière menante avec le tambour de frein (56) par un élément de liaison (72) séparé s'engageant d'une part dans une denture intérieure de la roue solaire (70) et d'autre part dans une denture extérieure d'un tambour de frein (56), qui est entouré par un ruban de frein (57) en formant un premier frein (B₁), en ce que la couronne (74) du premier engrenage coopère directement de manière menante avec l'arbre intermédiaire (76) et entre une bague de roulement intérieure (69) prévue sur le porte-pignons satellites (68) et une embase en forme de coupelle sur l'arbre intermédiaire (76) un premier accouplement de rattrapage (77/OWC₁) bloquant dans le sens de l'entraînement est agencé et un premier embrayage (64/CL₁) est prévu entre le tambour de frein (56) et le porte-pignons satellites (68), et en ce que aux positions de commande « 1, 2 et R », le premier embrayage (CL₁) étant enclenché, en 1ère, 2èmes vitesses et en vitesse arrière l'engrenage planétaire (66) se bloque dans les deux sens de rotation et à la position de commande « D » reste bloqué par l'accouplement de rattrapage (OWC₁) aux trois vitesses avant, et en ce que par le serrage du premier frein (B₁) en 4ème de la force, caractérisée en ce que l'axe (184) de support du levier de commande (182) est agencé dans un palier (186) réalisé sous forme d'une pièce en tôle façonnée ayant une section en forme de U, qui peut être introduit dans une poche de support (188) dans le carter de la boîte (46).

5. Boîte à vitesses multiples selon l'une quelconque des revendications 1 à 4, caractérisée en ce que dans le boîtier des soupapes de commande des supports sont prévus pour des générateurs de pression électromécaniques qui pénètrent, par leurs corps de soupapes, dans des canaux préparés de pression de conduite et de pression de signal de telle manière que le signal de pression d'étranglement qui est fonction du couple et le signal de pression de réglage qui est fonction de la vitesse de marche peuvent être représentés en fonction d'un champ caractéristique enregistré dans un microprocesseur.

FIG. 1A

0 164 553

FIG. 1B

0 164 553

| WÄHLHEBEL-POSITIONEN | | REIB- UND REAKTIONS-ELEMENTE IN FUNKTION | | | | | | | | |
|---|---|---|---|---|---|---|---|---|---|---|
| | | LUCL | $CL_1$ | $B_1$ | $OWC_1$ | $CL_2$ | $CL_3$ | $B_2$ | $B_3$ | $OWC_2$ |
| P | PARK | | | | | | | | | |
| R | RÜCKWÄRTSGANG (FIG.1e) | | ▨ | | ▨ | | | | ▨ | |
| N | NEUTRAL | | | | | | | | | |
| DE | VORWÄRTS (DRIVE ECONOMY) (FIG.1a) 1 | | | | | ▨ | ▨ | | | ▨ |
| | (1b) 2 | | | | | ▨ | | ▨ | | |
| | (1c) 3 | ▨ | | | | ▨ | ▨ | | | |
| | (1d) 4 | ▨ | | ▨ | | ▨ | | | | |
| D | VORWÄRTS (DRIVE) (1a) 1 | | | | | ▨ | ▨ | | | ▨ |
| | (1b) 2 | | | | | ▨ | ▨ | | | |
| | (1c) 3 | ▨ | | | | ▨ | ▨ | | | |
| 2 | 2. GANG (FIG.1g) | | ▨ | | | ▨ | | ▨ | | |
| 1 | 1. GANG (FIG.1f) | | ▨ | | ▨ | ▨ | | | ▨ | |

**FIG. 2**

FIG. 3

57/B₁

46

184    182    180

188    186

FIG. 4

128/B2

46

194    192    190

FIG. 5